# EUROPEAN PATENT APPLICATION

(11) **EP 4 682 682 A1**
(43) Date of publication of application: **21.01.2026**
(21) Application number: 25187657.9
(22) Date of filing: 04.07.2025
(51) Int. Cl.: G06F 3/01, B60K 35/00

(54) **SYSTEMS, APPARATUSES, METHODS, AND COMPUTER PROGRAM PRODUCTS FOR ADVANCED MOTION STABILIZATION**

(30) Priority: 18.07.2024 IN 202411054934; 21.10.2024 US 202418922144
(71) Applicant: Honeywell International Inc., Charlotte, NC 28202 (US)
(72) Inventor: J, Kirupakar, Charlotte, 28202 (US); SUDDRETH, John G., Charlotte, 28202 (US); KHAN, Kalimulla, Charlotte, 28202 (US); LEIPHON, Kenneth M., Charlotte, 28202 (US); MOORE, Eric M., Charlotte, 28202 (US); ALEKSA, Brian D., Charlotte, 28202 (US); CAUFIELD, Sean J., Charlotte, 28202 (US); HECK, Julie L., Charlotte, 28202 (US)
(74) Representative: Haseltine Lake Kempner LLP

(57) **Abstract**

Embodiments of the present disclosure provide techniques for advanced motion stabilization in display devices. A first image for rendering on a display device associated with a vehicle may be received. The first image may include at least one object. Device motion data for the display device may be identified. The device motion data may include one or more of device acceleration motion or device angular motion. Vehicle motion data for the vehicle may be identified. Predicted gaze position deviation data may be generated based on the device motion data and vehicle motion data. The position of the at least one object on a screen of the display device may be adjusted based at least in part on the predicted gaze position deviation data.

## Description

### CROSS-REFERENCE TO RELATED APPLICATIONS

This application claims the benefit of U.S. Provisional Patent Application No. 63/593,860, filed October 27, 2023 and India Provisional Patent Application No. 202411054934, filed July 18, 2024, the entire contents of which are incorporated by reference herein.

### TECHNOLOGICAL FIELD

The present disclosure is generally directed to motion stabilization in display devices. Example embodiments are directed to systems, apparatuses, method, and computer program products for advanced motion stabilization in display devices. Example embodiments provide next-generation motion-stabilized display devices with photonics techniques and methods.

### BACKGROUND

Various embodiments of the present disclosure address technical challenges related to motion stabilization in display devices such as mobile devices or other devices. Through applied effort, ingenuity, and innovation, Applicant has solved problems related to motion stabilization in display devices by developing solutions embodied in the present disclosure, which are described in detail below.

### BRIEF SUMMARY

In general, embodiments of the present disclosure provide methods, apparatus, systems, computer program products, and/or the like for advanced motion stabilization.

In accordance with one aspect of the present disclosure a computer-implemented method for motion stabilization is provided. The computer-implemented method is executable utilizing any of a myriad of computing device(s) and/or combinations of hardware, software, and/or firmware. In some example embodiments, an example computer-implemented method comprises receiving a first image for rendering on a display device associated with a vehicle, the first image comprising at least one object; identifying device motion data for the display device by receiving one or more device inertial measurement inputs from one or more device inertial measurement units, wherein the device motion data comprises one or more of (i) device acceleration motion or (ii) device angular motion; identifying vehicle motion data for the vehicle by receiving one or more vehicle inertial measurement inputs from one or more vehicle inertial measurement units, wherein the vehicle motion data comprises one or more of (i) vehicle acceleration motion or (ii) vehicle angular motion; generating, using a motion stabilization model framework, predicted gaze position deviation data based on the device motion data and vehicle motion data, wherein the predicted gaze position deviation data comprises estimated position change of a gaze of an eye of a user on a screen of the display device; and adjusting a position of the at least one object on a screen of the display device based least in part on the predicted gaze position deviation data.

In some embodiments, the computer-implemented method further comprises generating, using the motion stabilization model framework, predicted device position deviation data based on the device motion data, wherein the predicted device position deviation data comprises estimated position change of the display device.

In some embodiments, the computer-implemented method further comprises adjusting a position of the at least one object on the screen of the display device based at least in part on the predicted device position deviation data.

In some embodiments, the computer-implemented method further comprises detecting motion of the screen of the display device; and re-mapping touch zones on the screen based on the detected motion of the screen.

In some embodiments, generating the predicted gaze position deviation data based on the device motion data and the vehicle motion data comprises generating predicted eye motion data by applying the device motion data and the vehicle motion data to the motion stabilization model framework, wherein the predicted eye motion data comprises one or more of (i) estimated acceleration motion of the eye of the user or (ii) estimated angular motion of the eye of the user; and generating, the predicted gaze position deviation data by applying the predicted eye motion data to the motion stabilization model framework.

In some embodiments, the motion stabilization model framework comprises one or more of (i) eye angular VOR motion prediction model or (ii) eye angular position tracking model.

In some embodiments, the display device is one of a smartphone, a laptop computer, an avionics display, a primary flight device, or a heads down display.

In accordance with another aspect of the present disclosure, a computing system for motion stabilization is provided. In some example embodiments, the computing system comprises memory and one or more processors communicatively coupled to the memory, the one or more processors configured to receive a first image for rendering on a display device associated with a vehicle, the first image comprising at least one object; identify device motion data for the display device by receiving one or more device inertial measurement inputs from one or more device inertial measurement units, wherein the device motion data comprises one or more of (i) device acceleration motion or (ii) device angular motion; identify vehicle motion data for the vehicle by receiving one or more vehicle inertial measurement inputs from one or more vehicle inertial measurement units, wherein the vehicle motion data comprises one or more of (i) vehicle acceleration motion or (ii) vehicle angular motion; generate, using a motion stabilization model framework, predicted gaze position deviation data based on the device motion data and vehicle motion data, wherein the predicted gaze position deviation data comprises estimated position change of a gaze of an eye of a user on a screen of the display device; and adjust the position of the at least one object on the screen of the display device based at least in part on the predicted gaze position deviation data.

In some embodiments, the one or more processors are further configured to generate, using the motion stabilization model framework, predicted device position deviation data based on the device motion data, wherein the predicted device position deviation data comprises estimated position change of the display device.

In some embodiments, the one or more processors are further configured to adjust the position of the at least one object on the screen of the display device based at least in part on the predicted device position deviation data.

In some embodiments, the one or more processors are further configured to detect motion of the screen of the display device; and re-map touch zones on the screen based on the detected motion of the screen.

In some embodiments, generating the predicted gaze position deviation data based on the device motion data and the vehicle motion data comprises generating predicted eye motion data by applying the device motion data and the vehicle motion data to the motion stabilization model framework, wherein the predicted eye motion data comprises one or more of (i) estimated acceleration motion of the eye of the user or (ii) estimated angular motion of the eye of the user; and generating, the predicted gaze position deviation data by applying the predicted eye motion data to the motion stabilization model framework.

In some embodiments, the motion stabilization model framework comprises one or more of (i) eye angular VOR motion prediction model or (ii) eye angular position tracking model.

In some embodiments, the display device is one of a smartphone, a laptop computer, an avionics display, a primary flight device, or a heads down display.

In accordance with another aspect of the present disclosure, one or more non-transitory computer-readable storage media for motion stabilization is provided. In some example embodiments, the one or more non-transitory computer-readable storage media includes instructions that, when executed by one or more processors, cause the one or more processors to receive a first image for rendering on a display device associated with a vehicle, the first image comprising at least one object; identify device motion data for the display device by receiving one or more device inertial measurement inputs from one or more device inertial measurement units, wherein the device motion data comprises one or more of (i) device acceleration motion or (ii) device angular motion; identify vehicle motion data for the vehicle by receiving one or more vehicle inertial measurement inputs from one or more vehicle inertial measurement units, wherein the vehicle motion data comprises one or more of (i) vehicle acceleration motion or (ii) vehicle angular motion; generate, using a motion stabilization model framework, predicted gaze position deviation data based on the device motion data and vehicle motion data, wherein the predicted gaze position deviation data comprises estimated position change of a gaze of an eye of a user on a screen of the display device; and adjust the position of the at least one object on the screen of the display device based at least in part on the predicted gaze position deviation data.

In some embodiments, the one or more processors are further caused to generate, using the motion stabilization model framework, predicted device position deviation data based on the device motion data, wherein the predicted device position deviation data comprises estimated position change of the display device.

In some embodiments, the one or more processors are further caused to adjust the position of the at least one object on the screen of the display device based at least in part on the predicted device position deviation data.

In some embodiments, the one or more processors are further caused to detect motion of the screen of the display device; and re-map touch zones on the screen based on the detected motion of the screen.

In some embodiments, generating the predicted gaze position deviation data based on the device motion data and the vehicle motion data comprises generating predicted eye motion data by applying the device motion data and the vehicle motion data to the motion stabilization model framework, wherein the predicted eye motion data comprises one or more of (i) estimated acceleration motion of the eye of the user or (ii) estimated angular motion of the eye of the user; and generating, the predicted gaze position deviation data by applying the predicted eye motion data to the motion stabilization model framework.

In some embodiments, the motion stabilization model framework comprises one or more of (i) eye angular VOR motion prediction model or (ii) eye angular position tracking model.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below

### BRIEF DESCRIPTION OF THE DRAWINGS

Having thus described the embodiments of the disclosure in general terms, reference now will be made to the accompanying drawings, which are not necessarily drawn to scale, and wherein:
Figure 1 provides an example overview of an architecture in accordance with at least some embodiments of the present disclosure.
Figure 2 provides an example apparatus in accordance with at least some embodiments of the present disclosure.
Figure 3 is a flowchart diagram of an example process for motion stabilization in accordance with at least some embodiments of the present disclosure.
Figure 4 is a flowchart diagram of an example process for an aspect of a motion stabilization in accordance with at least some embodiments of the present disclosure.
Figures 5A-B illustrate an operation examples in accordance with at least some embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the present disclosure may be embodied in many different forms and should not be construed as limited to the embodiments set forth herein, rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated. Like numbers refer to like elements throughout.

### Overview and Technical Improvements

Example embodiments disclosed herein address technical challenges associated with motion stabilization in display devices such as mobile devices. Motion sickness is a condition that affects a significant number of people who use mobile devices or other display devices while on the move. It is caused by a mismatch between the visual, vestibular, and proprioceptive systems, which can lead to symptoms such as nausea, dizziness, and vomiting. In mobile devices (and other display devices), this mismatch can be caused by the vibrations that occur when the mobile device is in motion, leading to discomfort and reduced usability for users. The severity of motion sickness symptoms caused by vibrations in mobile devices can vary widely depending on a number of factors, including the individual's susceptibility to motion sickness, the intensity and frequency of the vibrations, and the duration of device use. Research has shown that prolonged use of mobile devices while in motion can increase the likelihood and severity of motion sickness symptoms.

In addition to motion sickness caused by vibrations, mobile devices (and other devices) can also cause other types of motion-related discomfort, such as eye strain, headaches, and neck pain. These symptoms are often caused by the need to maintain a stable gaze on a small screen while in motion, which can lead to eye fatigue, muscle tension, and discomfort. The impact of motion sickness caused by vibrations in mobile devices can be particularly significant for certain user groups, such as those with pre-existing vestibular disorders or those who are prone to motion sickness. For these users, the symptoms of motion sickness can be more severe and can have a greater impact on their ability to use mobile devices effectively.

The impact of motion sickness caused by vibrations in mobile devices can extend beyond individual users to affect entire industries. For example, motion sickness can be a significant problem for transportation workers, such as pilots and drivers, who rely on mobile devices for navigation and communication. In these cases, addressing the issue of motion sickness caused by vibrations in mobile devices (and other devices) is critical for ensuring safety and productivity.

Embodiments of the present disclosure disclose a multi-faceted approach and various techniques including, but not limited to, motion stabilization, screen size and refresh rate adjustments, position adjustments, and/or posture adjustments to mitigate the impact of vibrations on the user. In particular, example embodiments improve user experience and ensure safety when using devices while on the move or otherwise experiencing relative motion with respect to a device.

Example embodiments of the present disclosure describe various systems and methods for providing motion stabilized display (e.g., motion stabilized display screens) for use with, in, or on a vehicle. In various embodiments, the vehicle may be an aircraft such as a fixed wing aircraft, a commercial or military jet aircraft, a drone, a rotorcraft, helicopter, spacecraft, and other aerial vehicles. In various embodiments, the vehicle may be a land vehicle such as an automobile, truck, SUV, motorcycle, tank, or other civilian or military land vehicle. In some embodiments, the vehicle may be a watercraft such as a boat, ship, yacht, cruiser, battleship, or other civilian or military watercraft. In various embodiments, the present systems and methods may be applicable to various vehicle types, including those of manned, unmanned, autonomous, and/or internet-connected vehicles. In various embodiments, the vehicle may be a treadmill. It would be appreciated that in various embodiments, the vehicle can be any type of vehicle. In some embodiments, a vehicle may refer to any device and/or system that can cause a user associated with the device and/or system to experience motion and/or relative motion with respect to a mobile device (and/or other device).

Display devices (e.g., display/screens thereof) of display devices can be difficult to read by a human reader (e.g.., user) when in motion in or on a vehicle. For example, when the screen is part of an avionics system, the motion of the aerial vehicle can make it difficult for flight crew to read information (which could be a large amount of information) presented on an avionics display/screen. In addition, the use of touchscreens, which are ubiquitous in consumer electronics, can be difficult to use in a vehicle at motion. Example embodiments of the present disclosure provide systems and methods for increasing the readability of electronic screens for fast uptake of information for reduced dwell time, and at the same time allows extended dwell time when needed without the user experiencing nausea in high motion environments. Example embodiments provide systems and methods for enabling more accurate touchscreen touches, which significantly reduces mistouches while in high motion environments.

Example embodiments of the present disclosure provide at least solution(s) to the problem of motion sickness caused by vibrations and other motion-related discomfort in vehicles by incorporating a position stabilization controller (also referred to as motion stabilization controller herein) that adjusts the position of objects on the display/screen of a display device to account for estimated position changes caused by motion of the vehicle.

An example system may include a display device with a display screen, an imaging system for generating images to be displayed on the screen of the display device, and a position stabilization controller. In example embodiments, the position stabilization controller is configured with programming instructions and includes at least one processor. In example embodiments, the position stabilization controller is configured for receiving the image generated by the imaging system to be displayed on a display device. Additionally, in example embodiments, the position stabilization controller is configured to detect, or otherwise sense, motion in one or more of the X, Y, and Z axes, and/or detect, or otherwise sense, one or more of azimuth, elevation, and roll angular motion of the display device and/or a vehicle in which the display device is situated. In example embodiments, the position stabilization controller estimates the position change of the display device caused by the detected/sensed acceleration motion and/or angular motion of the display device and/or the vehicle and adjusts the position of an object on the display/screen of the display device to account for the estimated position change. By doing so, example embodiments allow the gaze of the eye of a user to remain fixed on the object, which in turn, reduces motion sickness and/or motion sickness symptoms such as nausea, dizziness, and vomiting, which can be caused by a mismatch between the visual, vestibular, and proprioceptive systems. This mismatch, for example, can occur when the user is trying to maintain a stable gaze on a screen (e.g., a small screen, or the like) while the vehicle is in motion. In this regard, example embodiments of the present disclosure improve various technologies and technical fields including, but not limited to, the technical field of motion stabilization and mobile device technologies.

### Definitions

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment ... "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

### System Architecture

Embodiments of the present disclosure may be implemented in various ways, including as computer program products that comprise articles of manufacture, as hardware, including circuitry, configured to perform one or more functions, and/or as combinations of specific hardware and computer program products. Such computer program products may include one or more software components including, for example, software objects, methods, data structures, or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query, or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together, such as in a particular directory, folder, or library. Software components may be static (e.g., pre-established, or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In some embodiments, a non-volatile computer-readable storage medium may include a floppy disk, flexible disk, hard disk, solid-state storage (SSS) (e.g., a solid-state drive (SSD), solid state card (SSC), solid state module (SSM), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In some embodiments, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as one or more methods, apparatuses, systems, computing devices (e.g., user devices, servers, etc.), computing entities, and/or the like. As such, embodiments of the present disclosure may take the form of an apparatus, system, computing device, computing entity, and/or the like executing instructions stored on one or more computer-readable storage mediums (e.g., via the aforementioned software components and computer program products) to perform certain steps or operations. Thus, embodiments of the present disclosure may also take the form of an entirely hardware embodiment, an entirely computer program product embodiment, and/or an embodiment that comprises combination of computer program products and hardware performing certain steps or operations.

Embodiments of the present disclosure are described below with reference to block diagrams, flowchart illustrations, and other example visualizations. It should be understood that each block of the block diagrams and flowchart illustrations may be implemented in the form of a computer program product, an entirely hardware embodiment, a combination of hardware and computer program products, and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments may produce specifically configured machines performing the steps or operations specified in the block diagrams and flowchart illustrations. In embodiments in which specific hardware is described, it is understood that such specific hardware is one example embodiment and may work in conjunction with one or more apparatuses or as a single apparatus or combination of a smaller number of apparatuses consistent with the foregoing according to the various examples described herein. Accordingly, the block diagrams and flowchart illustrations support various combinations of embodiments for performing the specified instructions, operations, or steps.

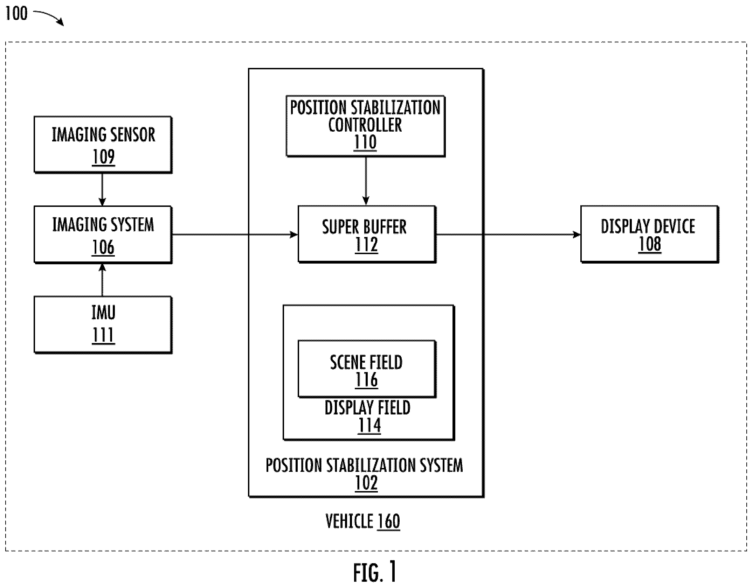

In this regard, Figure 1 shows an example system environment 100 within which at least some embodiments of the present disclosure may operate. The depiction of the example system environment 100 is not intended to limit or otherwise confine the embodiments described and contemplated herein to any particular configuration of elements or systems, nor is it intended to exclude any alternative configurations or systems for the set of configurations and systems that can be used in connection with embodiments of the present disclosure. Rather, Figure 1 and the system environment 100 disclosed therein is merely presented to provide an example basis and context for the facilitation of some of the features, aspects, and uses of the methods, apparatuses, computer readable media, and computer program products disclosed and contemplated herein.

It will be understood that while many of the aspects and components presented in Figure 1 are shown as discrete, separate elements, other configurations may be used in connection with the methods, apparatuses, computer readable media, and computer programs described herein, including configurations that combine, omit, separate, and/or add aspects and/or components. For example, in some embodiments, the functions of one or more of the illustrated components in Figure 1 may be performed by a single computing device or by multiple computing devices, which devices may be local or cloud based.

As shown in Figure 1, the example system environment 100 includes a position stabilization system 102 (also referred to herein as motion stabilization system 102) in communication with an imaging system 106 and/or a display device 108. **In** various embodiments, the one or more components of the system environment 100 is associated with and/or embodied by a vehicle such as vehicle 160. For example, one or more of the position stabilization system 102, imaging system 106, or display device 108 may be associated with or otherwise embodied by a vehicle such as vehicle 160. In various embodiments, the vehicle (e.g., vehicle 160) may be an aircraft such as a fixed wing aircraft, a commercial or military jet aircraft, a drone, a rotorcraft, helicopter, spacecraft, and other aerial vehicles. In various embodiments, the vehicle may be a land vehicle such as an automobile, truck, SUV, motorcycle, tank, or other civilian or military land vehicle. In some embodiments, the vehicle may be a watercraft such as a boat, ship, yacht, cruiser, battleship, or other civilian or military watercraft. In various embodiments, the present systems and methods may be applicable to various vehicle types, including those of manned, unmanned, autonomous, and/or internet-connected vehicles. In various embodiments, the vehicle may be a treadmill. It would be appreciated that in various embodiments, the vehicle can be any type of vehicle. In some embodiments, a vehicle may refer to any device and/or system that can cause a user associated with the device and/or system to experience motion and/or relative motion with respect to a mobile device (and/or other device).

In some embodiments, a display device is a physical electronic device that includes a display and that may be used by a user for any of a variety of purposes including, but not limited to, displaying media content containing one or more images. A display device, for example, may be a user device with a display. In some embodiments, such "display" (noun) included in a display device is a visual output component of the display device that may be used to visually display content including, but not limited to visual media content, a captured image or other portion of visual media content, and/or an application (e.g., visual media content application or related application, including web pages and the like). In some embodiments, "displaying" or "display" (verb, gerund, etc.) may refer to the action performed by such displays. In some embodiments, the display device 108 includes a tablet computer, a smartphone, a laptop computer, any other mobile device with a display (e.g., a screen), an avionics display such as an electronic flight bag, a primary flight display, a heads down display (HDD), and/or the like. In some embodiments, the display device 108 includes at least one display/screen. Additionally, in some embodiments, the display device 108 includes at least one input interface for receiving user input. Non-limiting examples of such input interface include keyboard, mouse, and/or the like. In some embodiments, the display device is a touchscreen device having at least one touchscreen display.

In various embodiments, the position stabilization system 102 is configured to account for screen motion and eye motion relative to each other in a high movement environment as well as human vestibulo-ocular reflex (VOR), which is a human body and vision system coupling characteristic. The position stabilization system 102 may include a position stabilization controller 110 (also referred to herein, interchangeably, as position stabilization calculation controller) configured to perform one or more functionalities associated with the position stabilization system 102, including motion stabilization functionalities configured to account for screen motion and eye motion relative to each other in a high movement environment as well as human vestibulo-ocular reflex (VOR). In some embodiments, the position stabilization controller 110 includes at least one processor configured to support such functionalities. Additionally, in some embodiments, the position stabilization controller 110 includes a computer-readable storage media (e.g., memory) to support such functionalities. In some embodiments, the functions/functionalities of one or more of the illustrated components of the position stabilization system 102 may be performed by a single computing device or by multiple computing devices, which devices may be local or cloud based. It will be appreciated that the various functions performed by two or more of the components of the position stabilization system 102 and/or of the system environment 100 may be performed by a single apparatus, subsystem, or system. For example, two or more of the components of the position stabilization system 102 and/or of the system environment 100 may be embodied by a single apparatus, subsystem, or system comprising one or more sets of computing hardware (e.g., processor(s) and memory) configured to perform various functions thereof.

The various functions of the position stabilization system 102 and system environment 100 may be performed by other arrangements of one or more computing devices and/or computing systems without departing from the scope of the present disclosure. In some embodiments, a computing system may comprise one or more computing devices (e.g., server(s)). In some embodiments, a computing system comprises memory and one or more processors communicatively coupled to the memory, The one or more processors may be configured to perform various operations as described herein.

The various components illustrated in the position stabilization system 102 and system environment 100 may be configured to communicate via one or more communication mechanisms, including wired or wireless connections, such as over a network, bus, or similar connection. For example, a network may include any wired or wireless communication network including, for example, a wired or wireless local area network (LAN), personal area network (PAN), metropolitan area network (MAN), wide area network (WAN), or the like, as well as any hardware, software and/or firmware required to implement it (such as, e.g., network routers, etc.). For example, the network may include a cellular telephone, an 802.11, 802.16, 802.20, and/or WiMAX network. Further, a network may include a public network, such as the Internet, a private network, such as an intranet, or combinations thereof, and may utilize a variety of networking protocols now available or later developed including, but not limited to TCP/IP based networking protocols.

In various embodiments, the components depicted in Figure 1 as being included in the position stabilization system 102, although not required to be an integral system, may be connected via one or more networks. In some embodiments, one or more APIs may be leveraged to communicate with and/or facilitate communication between one or more of the components illustrated in the position stabilization system 102 and system environment 100.

### Example System Operation

As described above, in various embodiments, the position stabilization system 102 is configured to provide motion stabilization in display devices that accounts for screen motion and eye motion relative to each other in a high movement environment as well as human vestibulo-ocular reflex (VOR)-a human body and vision system coupling characteristic.

A normal VOR response is a compensatory eye movement that counters head movement when the human neural system detects motion of the head in space. For instance, rotating the head on a horizontal plane to the right will induce the eye to rotate left relative to the head coordinate frame to stabilize the visual axis of the gaze and keep the image fixed on the retina during the head motion. This eye motion due to the VOR, however, is not an exact inverse of the head motion due to the dynamic effects from the neural sensors and oculomotor nucleus response and can result in an eye gaze being offset from a viewed object (e.g., an image) on a screen in a high motion environment. In various embodiments, the position stabilization system 102 leverages eye VOR compensation to enhance the performance of the position stabilization system 102.

In various embodiments, the imaging system 106 is configured for generating and/or providing image data for display to a user via a display of a display device 108 such as display device 108. Such image data may comprise one or more images, wherein an image may represent and/or comprise one or more objects. Non-limiting examples of a display device 108 includes a tablet computer, a smartphone, a laptop computer, any other mobile device with a screen (or otherwise a display), an avionics display such as an electronic flight bag, a primary flight display, a heads down display (HDD), and/or the like. For example, in some embodiments, the display device 108 is a mobile device such as a tablet computer, a smartphone, a laptop computer, and/or the like. In some embodiments, the imaging system 106 is configured to generate a super buffer 112 with an image that includes a display field 114 (having a field of view (FOV)) and a scene field 116 to be displayed on the display device 108. In some embodiments, the super buffer 112 is configured to buffer an images generated by the imaging system 106 and/or images processed by the position stabilization controller 110. In some embodiments, the super buffer 112 may be any type of volatile media, non-volatile media, or combination thereof. In some embodiments, the imaging system 106 and the display device 108 may be embodied by single device. In some embodiments, the imaging system 106 and the display device 108 may be embodied by different devices.

In various embodiments, the position stabilization system 102 (e.g., via one or more components thereof) is configured to interact with the imaging system 106 to process image(s) (e.g., image data) output by the imaging system 106 to account for screen motion and eye motion relative to each other in a high movement environment and/or as human vestibulo-ocular reflex (VOR), as described above. For example, in various embodiments, the position stabilization system 102 is configured to perform position stabilization, according to techniques described herein, on the image data output by the imaging system 106.

In various embodiments, example position stabilization system 102 is configured to receive a first image (e.g., first image data) for display on the display device 108. In some embodiments, the first image is received from the imaging system 106. In various embodiments, the position stabilization system 102 is configured to detect (e.g., sense, determine, or the like) acceleration motion and/or angular motion (e.g., azimuth, elevation, and roll) of the display device 108. In various embodiments, the position stabilization system 102 is configured to detect the acceleration motion in an X, Y, Z axis and/or angular motion (e.g., azimuth, elevation, and roll) of the display device 108. In some embodiments, the position stabilization system 102 is configured to detect the acceleration motion and/or angular motion of the display device based on one or more display IMUs and/or other devices associated with the display device 108. In some embodiments, the position stabilization system 102 is configured to receive device acceleration motion data from the one or more display IMUs and/or other devices associated with the display device 108, wherein the device acceleration motion data comprises one or more items of data representative and/or indicative of acceleration motion of the display device 108. Alternatively or additionally, in some embodiments, the position stabilization system 102 is configured to receive device angular motion data (e.g., display angular motion data) from one or more display IMUs (e.g., display device IMUs) and/or other devices associated with the display device 108. In this regard, in some embodiments, detecting the acceleration motion and/or angular motion of the display device 108 may comprise receiving, from one or more display IMUs and/or other devices associated with the display device, data (e.g., acceleration motion data and/or angular motion data) representative and/or indicative of the acceleration motion and/or angular motion (e.g., as further described below).

In various embodiments, the position stabilization system 102 is configured to detect (e.g., sense, determine, or the like) acceleration motion of the vehicle 160 in which the display device 108 and/or user associated with the display device 108 is located. The user, for example, may be an individual/person viewing the screen of the display device 108 (e.g., viewing image data rendered on the display device). In various embodiments, the position stabilization system 102 is configured to detect the acceleration motion in an X, Y, Z axis and/or angular motion (e.g., azimuth, elevation, and roll) of the vehicle 160. In some embodiments, the position stabilization system 102 is configured to detect the acceleration motion and/or angular motion of the vehicle device based on one or more vehicle IMUs and/or other devices associated with the vehicle 160. In some embodiments, the position stabilization system 102 is configured to receive vehicle acceleration motion data (e.g., vehicle acceleration motion) from the one or more vehicle IMUs and/or other devices associated with the vehicle 160, wherein the vehicle acceleration motion data comprises one or more items of data representative and/or indicative of acceleration motion of the display device 108. Alternatively or additionally, in some embodiments, the position stabilization system 102 is configured to receive vehicle angular motion data from one or more vehicle IMUs and/or other devices associated with the vehicle 160. In this regard, in some embodiments, detecting the acceleration motion and/or angular motion of the vehicle 160 may comprise receiving, from one or more display IMUs and/or other devices associated with the vehicle 160, data (e.g., vehicle acceleration motion data and/or vehicle angular motion data) representative and/or indicative of the acceleration motion and/or angular motion (e.g., as further described below).

In various embodiments, the position stabilization system 102 is configured to estimate, or otherwise determine, an acceleration motion and/or angular motion of an eye(s) of the user based on the detected acceleration motion and/or angular motion of the display device 108 and/or the vehicle 160. In various embodiments, the position stabilization system 102 is configured to estimate a position change of a gaze of the user's eye (e.g., eye(s) of the user) on a screen of the display device 108 based on the estimated acceleration motion and/or angular motion of the user's eye and/or eye motion due to VOR.

In some example embodiments, the position stabilization system 102 leverages an eye angular VOR motion prediction model and/or eye angular position tracking model to estimate the position change of a gaze of the user's eye on a screen of the display device. In such example embodiments, the position stabilization system 102, using the eye angular VOR motion prediction model, generates a predicted eye position due to VOR effects and using, the eye angular position tracking model, corrects the predicted eye position after head motion has subsided. In some embodiments, the VOR motion prediction model is a mathematical model (e.g., VOR motion prediction mathematical model). Alternatively or additionally, in some embodiments, the VOR motion prediction model is a machine learning model. In some embodiments, the eye angular position tracking model is a mathematical model (e.g., eye angular position tracking mathematical model). Alternatively or additionally, in some embodiments, the eye angular position tracking model is a machine learning model.

In some embodiments the eye angular VOR motion prediction model comprises a dynamic pseudo-inverse transfer function developed with tunable time delays and tunable forward gains to represent the human eye oculomotor mechanism and counter reflex during head motion. Additionally, in some embodiments, the eye angular VOR motion prediction model comprises a feedback controller with the eye angular position as feedback signal designed to mitigate the drift of the eye position from the head position. In some embodiments, the eye angular VOR motion prediction model utilizes three angular rates and positions of the head motion for three axes angular eye VOR motion. In some embodiments, the output of the eye angular VOR motion prediction model comprise the predicted eye angular position defined in the head coordinate induced by the VOR. In various embodiments, the eye angular VOR motion prediction model operates in all three axes of movement (e.g., X, Y, Z axes). It would be appreciated that in some embodiments, the eye angular VOR motion prediction model may operate in less than all three axes of movement. The X axis, for example, may run through the front and back of the user's head. The Y axis, for example, may run through the sides of the user's head. The Z axis, for example, may run vertically through the user's head.

In some embodiments, the input(s) to the eye angular VOR motion prediction model may include the user's head position (e.g., defined in each of the three axes), the user's head velocity (e.g., defined in each of the three axes), and one or more tuning parameters (e.g., defined in each of three axes). Additionally, in some embodiments, the input(s) to the eye angular VOR motion prediction model may include speed gains for each direction of rotation in each of the three axes (e.g., the gain to attenuate the sensed head angular rate for the VOR correction effect). In various embodiments, the eye angular VOR motion prediction model may be configured to output a predicted eye position in each of the three axes. In various embodiments, the output(s) of the eye angular VOR motion prediction model may be provided as input to the eye angular position tracking model.

In some embodiments, the eye angular position tracking model may be configured to reduce the delta eye position (e.g., change in eye position) to about zero after detection of static head motion. For example, the eye angular position tracking model may be configured to enable the eye motion to track a stationary image as the eye angular position is aligned with the head position. In some embodiments, the input(s) to the eye angular position tracking model comprises the user's head position (e.g., defined in each of the three axes)), the user head velocity (e.g., defined in all three axes), and/or the predicted eye position from the eye angular VOR motion prediction model (e.g., defined in each of the three axes).

In some embodiments, the eye angular position tracking model comprises an oculomotor plant design parameter(s), feedback control loop (e.g., with delta input being set to about zero (0) for the static motion condition). In some embodiments, the eye angular position tracking model comprises or otherwise leverages one or more parameters to mitigate the effects of motion jitter. In some embodiments, the output of the eye angular position tracking model comprise a change (e.g., delta) in eye position to reduce the eye position.

In various embodiments, the position stabilization system 102 is configured to estimate a position change of the display device based on the detected acceleration motion and/or angular motion of the display device. In some embodiments, the position stabilization system 102 may leverage an angular VOR motion prediction model and/or an angular position tracking model to estimate the position change of the display device 108.

In various embodiments, the position stabilization system 102 is configured to adjust the position of an object on the screen of the display device to account for the estimated position change of the gaze of the eye and/or the estimated position change of the display device 108. The object, for example, may be the image may comprise a part of the image By adjusting the position of an object on the screen of the display device to account for the estimated position change of the gaze of the eye and/or the estimated position change of the display device, the position stabilization system 102 provides for or otherwise allows the gaze of the user's eye to remain fixed on the object.

In various embodiments, the position stabilization system 102 is configured to generate a second, subsequent image, as part of a continuous stream of images, based on the first image and based on the adjusted position of the object on the screen. In various embodiments, the position stabilization system 102 is configured to display the second image on the display device 108. In various embodiments, the position stabilization system, using the super buffer 112, may be configured to buffer the second image before providing to the display device. For example, in some embodiments, the position stabilization system 102 may be configured to, using the super buffer 112, buffer the first image and/or the second subsequent image.

In various embodiments, the example position stabilization system 102 is configured to improve the legibility of a moving screen (e.g., moving screen of the display device 108) by moving the image in synchronization (e.g., in sync) with the user's gaze. In various embodiments, the example position stabilization system 102 is configured to detect, sense, and/or the like the motion of the screen (e.g., based on the motion of the display device comprising the screen) and render an image which is an inverse of the detected motion. When displayed on the moving screen of the display device 108, the image is space stabilized to prevent motion and retina blur associated with moving electronic screens. Additionally, in various embodiments, the example position stabilization system 102 is configured to re-map the touch zones on the screen based on the detected motion of the screen, such that the touch zones are space stabilized as well.

In various embodiments, the imaging system 106 is configured to receive image inputs from an image sensor 109 and generate a scene with real-time video to be displayed on the display device 108. In some embodiments, the imaging system 106 may generate synthetic imagery (e.g., conformal and/or non-conformal) to overlay the real-time video. In some the imaging system 106 may be configured to generate a super buffer 112 that includes a display field 114 and a scene field 116. In this regard, in some embodiments, the position stabilization system 102 may be associated with a super buffer 112 with an image that includes a display field 114 and scene field 116 for display on the display device 108. The image sensor 109 may comprise one or more video cameras, Lidar, millimeter wave (MMW), Radar, and/or the like. The example display device 108 may comprise a tablet computer display, a smartphone display, a laptop computer display, any other mobile device with a screen, an avionics display such as an electronic flight bag, a primary flight display, a heads down display (HDD), and/or the like.

As described above, in some embodiments, the imaging system 106 may generate synthetic imagery (e.g., conformal and/or non-conformal) to overlay the real-time video. Alternatively or additionally, in various embodiments, the example imaging system 106 may generate a graphical user interface (GUI) overlay to overlay the real-time video.

In various embodiments, the imaging system 106 may be configured to receive inertial inputs from an inertial measurement unit (IMU) 111. For example, the imaging system 106 may be configured to receive inertial inputs from one or more IMU 111.The inertial inputs may comprise acceleration motion data, angular motion data, and/or the like. For example, the imaging system 106 may receive acceleration motion data from accelerometers. As another example, the imaging system 106 may receive angular motion data from gyroscopes. In various embodiments, the imaging system 106 may be configured to receive motion/position inputs from other motion/position sensors such as, for example, a global positioning system (GPS). In various embodiments, the vehicle 160 includes or is otherwise associated with such accelerometers, gryroscopes, and/or other motion/position sensors. In various embodiments, such accelerometers, gryroscopes, and/or other motion/position sensors are associated with the imaging system 106. In various embodiments, the imaging system 106, image sensor 109, IMU 111, and/or display device 108 may be part of a single system or device such as, for example, a tablet computer, smartphone, laptop computer, or other mobile device. In various embodiments, the imaging system 106, image sensor 109, IMU 111, and/or display device 108 may be part of a single system that is fixed to the vehicle 160, such as a cockpit display of an aircraft.

In various embodiments, the imaging system 106 may be configured to generate a graphical user interface (GUI) overlay to be overlayed over the scene (e.g., scene with real-time video generated by the imaging system 106 as described above). In various embodiments, the imaging system 106 may also be configured to produce a synthetic overlay, such as a conformal synthetic overlay or a non-conformal synthetic overlay, to be overlayed over the scene. In various embodiments, the imaging system 106 may be configured to sense touch detection events within touch zones in a display/screen of a display device.

In various embodiments, the position stabilization controller 110 is configured to perform various functionalities associated with the position stabilization system 102, as described above. As one example, in various embodiments, the position stabilization controller 110 is configured to perform various functionalities relating to adjusting the position of an object in a display of a display device to account for the estimated position change of the eye gaze of the user viewing the display and the estimated position change of the display device. For example, the position stabilization controller 110 may be configured to perform one or more operations configured to account for screen motion and eye motion relative to each other in a high movement environment as well as human vestibulo-ocular reflex (VOR).

In various embodiments, the position stabilization controller 110 is configured adjust the position of scene field 116 within the display field 114 of the super buffer 112 (e.g., generated by the imaging system 106). In various embodiments, the position stabilization controller 110 is configured to adjust the position of the scene field 116 within the display field 114 such that the scene displayed on the display device 108 is adjusted to account for estimated position change of an eye gaze (e.g., of the user) and the estimated position change of the display device 108.

In various embodiments, the position stabilization controller 110 is configured to receive vehicle IMU input. The vehicle IMU input may include detected and/or sensed acceleration motion in an X, Y, Z axis and/or angular motion (e.g., azimuth, elevation, and roll) of the vehicle 160. The position stabilization controller 110 may be configured to receive the vehicle IMU input from one or more IMU or other devices associated with the vehicle 160. Such IMU associated with the vehicle 160 may be referred to herein as vehicle IMU. The position stabilization controller 110 may be configured to receive display IMU input that includes detected and/or sensed acceleration motion in an X, Y, Z axis and/or angular motion (e.g., azimuth, elevation, and roll) of the display device 108. The position stabilization controller 110 may be configured to receive the display IMU input from one or more IMU or other devices associated with the display device 108. Such IMU associated with the display device 108 may be referred to herein as display IMU.

In various embodiments, the position stabilization controller 110 is configured to receive camera input. The camera input may include eye motion data from which an eye gaze of a user may be derived. In various embodiments, the position stabilization controller 110 is configured to receive sensor input that represent and/or is indicative of display frame rate to estimate system latency that is used to compensate for lagged display effects of system latency. For example, the position stabilization controller 110 may be configured to receive sensor input that determines, detects, and/or senses display frame rate to estimate system latency that is used to compensate for lagged display effects of system latency.

In various embodiments, the position stabilization controller 110 is configured to use the vehicle IMU input, display IMU input, camera input, and/or the sensor input to estimate the acceleration motion and/or angular motion of an eye of the user (e.g. reader), to estimate a position change of an eye gaze on a screen/display of the display device 108 based on the estimated acceleration motion and/or angular motion of the eye and eye motion due to VOR, to estimate a position change of the display device based on the detected acceleration motion and/or angular motion of the display device, and to adjust the position of an object in a display to account for the estimated position change of the eye gaze and the estimated position change of the display device to allow the eye gaze to remain fixed on the object, as described above.

In various embodiments, the example position stabilization controller 110 is configured to use the display IMU accelerometer of the display IMU input to facilitate and/or perform one or more functions of the position stabilization system 102. In various embodiments, the position stabilization controller 110 is configured to use the display IMU accelerometer of the display IMU input along with one or more of the display gyroscope data of the display IMU input, vehicle IMU input, and camera input.

In some embodiments, the position stabilization controller 110 is configured to compute anti-shake position correction using the IMU input. In some embodiments, the position stabilization controller 110 is configured to monitor eye gaze and/or track head movement of a using the camera input. In some embodiments, the position stabilization controller 110 is configured to correct eye gaze prediction using the camera input.

### Example Apparatuses of the Disclosure

Having discussed example systems in accordance with the present disclosure, example apparatuses in accordance with the present disclosure will now be described.

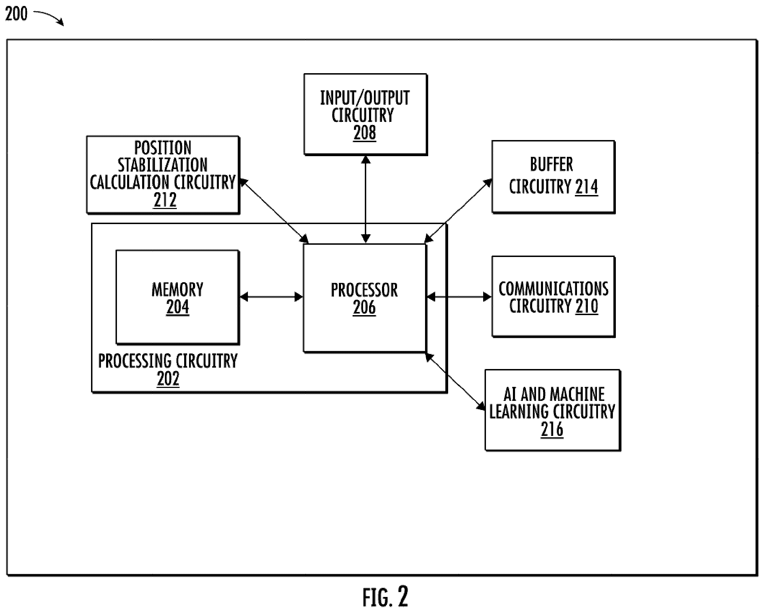

Figure 2 illustrates a block diagram of an apparatus in accordance with some example embodiments of the present disclosure. Specifically, FIG. 2 depicts an example position stabilization apparatus 200 ("apparatus 200") specially configured in accordance with at least some example embodiments of the present disclosure. In some embodiments, the position stabilization system 102 or one or more portions (e.g., one or more individual apparatuses) thereof and/or one or more other components (or portions thereof) illustrated in FIG. 1, if embodied in a particular embodiment, may be embodied by one or more apparatuses 200. The apparatus 200 may be embodied as one or more of a specifically configured personal computing apparatus, a specifically configured cloud-based computing apparatus, a specifically configured embedded computing device (e.g., configured for edge computing, and/or the like).

In some embodiments, the apparatus 200 may include a processing circuitry 202 as shown in Figure 2. It should be noted, however, that the components, or elements illustrated in and described with respect to Figure 2 below may not be mandatory and thus one or more may be omitted in certain embodiments. Additionally, some embodiments, may include further or different components or elements beyond those illustrated in and described with respect to Figure 2. In some embodiments, the functionality of the position stabilization system 102, the other devices and/or systems interacting with the position stabilization system 102, or any subset thereof may be performed by a single apparatus 200 or multiple apparatuses 200. In some embodiments, the apparatus 200 may comprise one or a plurality of physical devices, including distributed, cloud-based, and/or local devices.

Although some components are described with respect to functional limitations, it should be understood that the particular implementations necessarily include the use of particular computing hardware, such as the hardware shown in Figure 2. It should also be understood that certain of the components described herein may include similar or common hardware. For example, two sets of circuitries for example, may both leverage use of the same processor(s), network interface(s), storage medium(s), and/or the like, to perform their associated functions, such that duplicate hardware is not required for each set of circuitry and a single physical circuitry may be used to perform the functions of multiple circuitries described herein. The use of the term "circuitry" as used herein with respect to components of the apparatuses described herein should therefore be understood to include particular hardware configured to perform the functions associated with the particular circuitry as described herein.

In some embodiments, "circuitry" may include processing circuitry, storage media, network interfaces, input/output devices, and/or the like. In some embodiments, other elements of the apparatus 200 may provide or supplement the functionality of another particular set of circuitry. For example, the processor 206 in some embodiments provides processing functionality to any of the sets of circuitries, the memory 204 provides storage functionality to any of the sets of circuitry, the communications circuitry 210 provide network interface functionality to any of the sets of circuitry, and/or the like.

The apparatus 200 may include or otherwise be in communication with processing circuitry 202 that is configurable to perform actions in accordance with one or more example embodiments disclosed herein. In this regard, the processing circuitry 202 may be configured to perform and/or control performance of one or more functionalities of the apparatus 200 in accordance with various example embodiments, and thus may provide means for performing functionalities of the apparatus 200 in accordance with various example embodiments. The processing circuitry 202 may be configured to perform data processing, application, and function execution, and/or other processing and management services according to one or more example embodiments. In some embodiments, the apparatus 200 or a portion(s) or component(s) thereof, such as the processing circuitry 202, may be embodied as or comprise a chip or chip set. In other words, apparatus 200 or the processing circuitry 202 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 200 or the processing circuitry 202 may therefore, in some cases, be configured to implement an embodiment of the disclosure on a single chip or as a single "system on a chip." As such, in some cases, a chip or chipset may constitute means for performing one or more operations for providing the functionalities described herein.

In some embodiments, the processing circuitry 202 may include a processor 206 (and/or co-processor or any other processing circuitry assisting or otherwise associated with the processor) and, in some embodiments, such as that illustrated in Figure 2, may further include memory 204. The processing circuitry 202 may be in communication with or otherwise control a user interface (e.g., embodied by input/output circuitry 208) and/or a communications circuitry 210. As such, the processing circuitry 202 may be embodied as a circuit chip (e.g., an integrated circuit chip) configured (e.g., with hardware, software or a combination of hardware and software) to perform operations described herein.

The processor 206 may be embodied in a number of different ways. For example, the processor 206 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. Although illustrated as a single processor, it will be appreciated that the processor 206 may comprise a plurality of processors. The plurality of processors may be in operative communication with each other and may be collectively configured to perform one or more functionalities of the apparatus 200 as described herein. In some example embodiments, the processor 206 may be configured to execute instructions stored in the memory 204 or otherwise accessible to the processor 206. As such, whether configured by hardware or by a combination of hardware and software, the processor 206 may represent an entity (e.g., physically embodied in circuitry - in the form of processing circuitry 202) capable of performing operations according to embodiments of the present disclosure while configured accordingly. Thus, for example, when the processor 206 is embodied as an ASIC, FPGA or the like, the processor 206 may be specifically configured hardware for conducting the operations described herein. Alternatively, as another example, when the processor 206 is embodied as an executor of software instructions, the instructions may specifically configure the processor 206 to perform one or more operations described herein. The use of the terms "processor" and "processing circuitry" may be understood to include a single core processor, a multi-core processor, multiple processors internal to the apparatus 200, and/or one or more remote or "cloud" processor(s) external to the apparatus 200.

In some example embodiments, the memory 204 may include one or more non-transitory memory devices such as, for example, volatile and/or non-volatile memory that may be either fixed or removable. In this regard, the memory 204 may comprise a non-transitory computer-readable storage medium. It will be appreciated that while the memory 204 is illustrated as a single memory, the memory 204 may comprise a plurality of memories. The memory 204 may be configured to store information, data, applications, instructions and/or the like for enabling the apparatus 200 to carry out various functions in accordance with one or more example embodiments. For example, the memory 204 may be configured to buffer input data for processing by the processor 206. Additionally or alternatively, the memory 204 may be configured to store instructions for execution by the processor 206. The memory 204 may include one or more databases that may store a variety of files, contents, or data sets. Among the contents of the memory 204, applications may be stored for execution by the processor 206 in order to carry out the functionality associated with each respective application. In some cases, the memory 204 may be in communication with one or more of the processors 206, input/output circuitry 208 and/or communications circuitry 210, via a bus(es) for passing information among components of the apparatus 200.

The input/output circuitry 208 may provide output to the user or an intermediary device and, in some embodiments, may receive one or more indication(s) of user input. In some embodiments, the input/output circuitry 208 is in communication with processor 206 to provide such functionality. The input/output circuitry 208 may include one or more user interface(s) and/or include a display that may comprise the user interface(s) rendered as a web user interface, an application interface, and/or the like, to the display of a display device (e.g., user device), a backend system, or the like. The input/output circuitry 208 may be in communication with the processing circuitry 202 to receive an indication of a user input at the user interface and/or to provide an audible, visual, mechanical, or other output to the user. As such, the input/output circuitry 208 may include, for example, a keyboard, a mouse, a joystick, a display, a touch screen display, a microphone, a speaker, and/or other input/output mechanisms. As such, the input/output circuitry 208 may, in some example embodiments, provide means for a user to access and interact with the apparatus 200. The processor 206 and/or input/output circuitry 208 comprising or otherwise interacting with the processor 206 may be configured to control one or more functions of one or more user interface elements through computer program instructions (e.g., software and/or firmware) stored on a memory accessible to the processor 206 (e.g., stored on memory 204, and/or the like).

The communications circuitry 210 may include one or more interface mechanisms for enabling communication with other devices and/or networks. In some cases, the communications circuitry 210 may be any means such as a device or circuitry embodied in either hardware, or a combination of hardware and software that is configured to receive and/or transmit data from/to a network and/or any other device or module in communication with the processing circuitry 202. The communications circuitry 210 may, for example, include an antenna (or multiple antennas) and supporting hardware and/or software for enabling communications with a wireless communication network (e.g., a wireless local area network, cellular network, global positing system network, and/or the like) and/or a communication modem or other hardware/software for supporting communication via cable, digital subscriber line (DSL), universal serial bus (USB), Ethernet or other methods.

In some embodiments, the apparatus 200 may include a position stabilization circuitry 212 which may include hardware components, software components, and/or a combination thereof configured to, with the processing circuitry 202, input/output circuitry 208 and/or communications circuitry 210, perform one or more functions associated with the position stabilization controller 110 (as described above with reference to Figure 1). For example, the position stabilization circuitry 212 may include hardware, software, firmware, and/or a combination thereof, designed and/or configured to capture, receive, request, and/or otherwise gather data associated with operations of the vehicle 160. As another example, the position stabilization circuitry 212 may include hardware, software, firmware, and/or a combination thereof, that communicates with one or more sensor(s) component(s), and/or the like within the vehicle 160 to receive particular data associated with the vehicle 160. As another example, the position stabilization circuitry 212 may include hardware, software, firmware, and/or a combination thereof, that retrieves particular data associated with the vehicle 160 from one or more data repository/repositories accessible to the apparatus 200. The position stabilization circuitry 212 may access, facilitate access, receive process, manipulate, provide, or otherwise use, or make available for use, data used by one or more other components of the apparatus 200 through, for example, the use of applications or APIs executed using a processor, such as the processor 206. In some embodiments, the position stabilization circuitry 212 may interact with the memory 204, which may store the aforementioned data. It should also be appreciated that, in some embodiments, the position stabilization circuitry 212 may include a separate processor, specially configured field programmable gate array (FPGA), or application specific interface circuit (ASIC) to provide or otherwise facilitate access to such data used by one or more other components of the apparatus 200. The position stabilization circuitry 212 may also provide for communication with other components of the apparatus, system and/or external systems via a network interface provided by the communications circuitry 210.

In some embodiments, the apparatus 200 may include a buffer circuitry 214. The buffer circuitry 214 may include hardware components, software components, and/or a combination thereof configured to, with the processing circuitry 202, input/output circuitry 208 and/or communications circuitry 210, perform one or more functions related to image buffering or otherwise associated with the super buffer 112 (as described above with reference to Figure 1). The buffer circuitry 214 may access, facilitate access, receive process, manipulate, provide, or otherwise use, or make available for use, data used by one or more other components of the apparatus 200 through, for example, the use of applications or APIs executed using a processor, such as the processor 206. In some embodiments, the buffer circuitry 214 may interact with the memory 204, which may store the aforementioned data. It should also be appreciated that, in some embodiments, the buffer circuitry 214 may include a separate processor, specially configured field programmable gate array (FPGA), or application specific interface circuit (ASIC) to provide or otherwise facilitate access to such data used by one or more other components of the apparatus 200. The buffer circuitry 214 may also provide for communication with other components of the apparatus, system and/or external systems via a network interface provided by the communications circuitry 210.

In some embodiments, the apparatus 200 may include AI and machine learning circuitry 216. The AI and machine learning circuitry 216 may include hardware, software, firmware, and/or a combination thereof designed and/or configured to request, receive, process, generate, and transmit data, data structures, control signals, and electronic information for training and executing a trained AI and machine learning model configured for facilitating the operations and/or functionalities described herein. For example, in some embodiments the AI and machine learning circuitry 216 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the AI and machine learning circuitry 216 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 216 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

### Example Processes/Methods for Position Stabilization

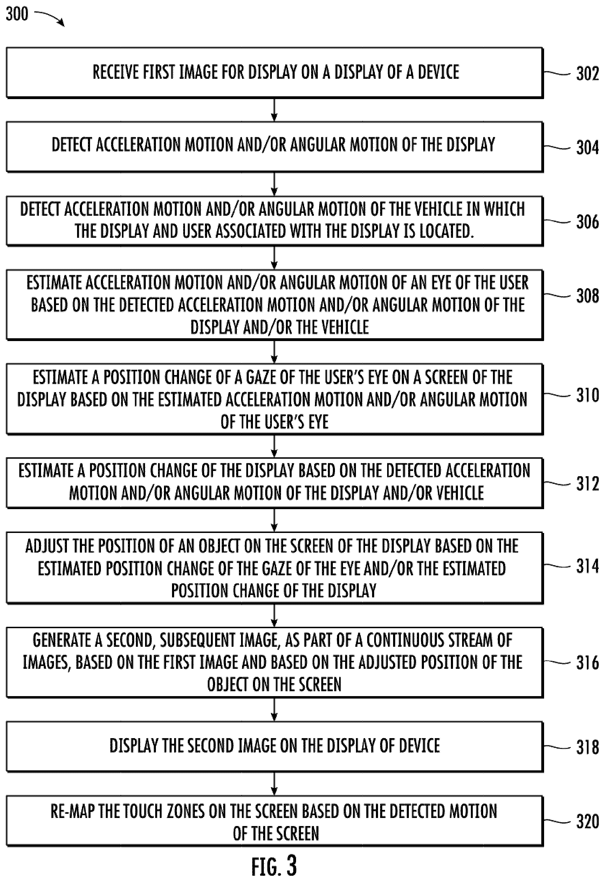

Figure 3 illustrates an example flow chart depicting operations for data flow for position stabilization (e.g., motion stabilization) in accordance with at least some embodiment discussed herein. In some example embodiments, the processes shown and described with respect to the flow chart of Figure 3 may be generated, performed, and/or otherwise facilitated by the various systems and apparatuses shown and described with respect to Figures 1-2.

As described above, position stabilization system 102 is configured to account for screen motion and eye motion relative to each other in a high movement environment as well as human vestibulo-ocular reflex (VOR)-a human body and vision system coupling characteristic.

A normal VOR response is a compensatory eye movement that counters head movement when the human neural system detects motion of the head in space. For instance, rotating the head on a horizontal plane to the right will induce the eye to rotate left relative to the head coordinate frame to stabilize the visual axis of the gaze and keep the image fixed on the retina during the head motion. This eye motion due to the VOR, however, is not an exact inverse of the head motion due to the dynamic effects from the neural sensors and oculomotor nucleus response and can result in an eye gaze being offset from a viewed object on a screen in a high motion environment. In various embodiments, the position stabilization system 102 leverages eye VOR compensation to enhance the performance of the position stabilization system 102.

As depicted at block 302, the process 300 begins with receiving a first image for display (e.g., rendering) on a display (referred to herein interchangeably as screen) of a display device (e.g., scree/display of device such as mobile phone, laptop, navigation system, and/or the like). For example, the example position stabilization system 102 (e.g., the position stabilization controller 110 thereof) may be configured to receive a first image for display on a display of a display device. The first image may represent and/or comprise at least one object (e.g., visual representation of one or more objects). In various embodiments, the display device is associated with a vehicle, such as described above.

At block 304, the process continues with detecting (e.g., and/or sensing, determining, and/or like) acceleration motion and/or angular motion of the display device. In some embodiments, the position stabilization system 102 (e.g., using the position stabilization controller 110 thereof) detects (e.g., sense, determine, or the like) acceleration motion of the display device. Alternatively or additionally, in some embodiments, the position stabilization system 102 (e.g., using the position stabilization controller 110 thereof) detects (e.g., sense, determine, or the like) angular motion of the display device.

In some embodiments, the position stabilization system 102 detects the acceleration motion based on one or more display IMUs (referred to herein interchangeably as device IMUs) and/or other devices associated with the display device 108. In some embodiments, the position stabilization system 102 detects the angular motion of the display device based on one or more display IMUs and/or other devices associated with the display device 108. In some embodiments, detecting the acceleration motion of the display device comprises, the position stabilization system 102, receiving device acceleration motion data (e.g., device acceleration motion data) from the one or more display IMUs and/or other devices associated with the display device, wherein the device acceleration motion data comprises one or more items of data representative and/or indicative of acceleration motion of the display device. In some embodiments, detecting the angular motion of the display device comprises, the position stabilization system 102, receiving device angular motion data from one or more display IMUs and/or other devices associated with the display device 108, wherein the device angular motion data comprises one or more item of data representative and/or indicative of angular motion of the display device. In this regard, in various embodiments, the position stabilization system 102 (e.g., using the position stabilization controller 110 thereof) identifies device motion data for the display device by receiving one or more device inertial measurement inputs (e.g., display IMU inputs) from one or more device inertial measurement units (e.g., display IMUs), wherein the device motion data comprises one or more of device acceleration motion (e.g., acceleration motion of the display device) or device angular motion (angular motion of the display device). In some embodiments, acceleration motion is the movement of an object where the velocity is changing over time (e.g., rate of change of velocity). In this regard, in some embodiments, device acceleration motion is the movement of the display device where the velocity is changing over time. In some embodiments, angular motion is the movement of an object around a fixed axis or curved path. In some examples, such motion around a fixed axis or curved path is at a constant angular velocity. In this regard, in some embodiments, device angular motion is the motion of the display device around a fixed axis or curved path.

At block 306, the process 300 continues with detecting acceleration motion and/or angular motion of the vehicle in which the display device and user associated with the display device is located. In some embodiments, the position stabilization system 102 (e.g., the position stabilization controller 110 thereof) detects acceleration motion of the vehicle in which the display device and user associated with the display device is located. In some embodiments, the position stabilization system 102 (e.g., e.g., the position stabilization controller 110 thereof) detects angular motion of the vehicle in which the display device and user associated with the display device is located. For example, the position stabilization system 102 may detect the acceleration motion of the vehicle in an X, Y, Z axis and detect the angular motion (e.g., azimuth, elevation, and roll) of the vehicle.

In some embodiments, the position stabilization system 102 detects the acceleration motion of the vehicle based on one or more vehicle IMUs and/or other devices associated with the vehicle. In some embodiments, the position stabilization system 102 detects the angular motion of the vehicle based on one or more vehicle IMUs and/or other devices associated with the vehicle. In some embodiments, detecting the acceleration motion of the vehicle comprises, the position stabilization system 102, receiving vehicle acceleration motion data from the one or more display IMUs and/or other devices associated with the vehicle, wherein the vehicle acceleration motion data comprises one or more items of data representative and/or indicative of acceleration motion of the vehicle. In some embodiments, detecting the angular motion of the vehicle comprises, the position stabilization system 102, receiving vehicle angular motion data from one or more vehicle IMUs and/or other devices associated with the vehicle, wherein the vehicle angular motion data comprises one or more items of data representative and/or indicative of angular motion of the vehicle. In this regard, in some embodiments, the position stabilization system 102 identifies vehicle motion data for the vehicle by receiving one or more vehicle inertial measurement inputs (e.g., vehicle IMU inputs) from one or more vehicle inertial measurement units, wherein the vehicle motion data comprises one or more of vehicle acceleration motion (acceleration motion of the vehicle) or vehicle angular motion (angular motion of the vehicle). In some embodiments, vehicle acceleration motion is the movement of the vehicle where the velocity is changing over time. In some embodiments, vehicle angular motion is the motion of the vehicle around a fixed axis or curved path.

At block 308, the process 300 continues with estimating an acceleration motion and/or angular motion of an eye(s) of the user based on the detected acceleration motion and/or angular motion of the display device and/or the vehicle. For example, the position stabilization system 102 (e.g., using the position stabilization controller 110 thereof) may be configured to generate predicted eye motion data that comprises one or more items of data representative and/or indicative of estimated acceleration motion and/or angular motion of an eye of the user based on the detected acceleration motion and/or angular motion of the display device and the vehicle. In some embodiments, the position stabilization system 102 leverages one or more specially configured models to generate the predicted eye motion data. In such some embodiments, the position stabilization system 102 applies input data comprising one or more of detected acceleration motion of the display device, detected angular motion of the display device, detected acceleration motion of the vehicle, or detected angular motion of the vehicle to a motion prediction model configured to process the input data and output the predicted motion data comprising one or more items of data representative and/or indicative of estimated acceleration motion and/or angular motion of an eye(s) of the user. For example, in some embodiments, the input data comprises one or more of device acceleration motion data, device angular motion data, vehicle acceleration motion data, or vehicle angular motion data received from one or more IMUs or other devices as described above. In some embodiments, the motion prediction model is a machine learning model. In some embodiments, the motion prediction model is a component of a motion stabilization model framework. In this regard, in such some embodiments, generating predicted eye motion data may comprise applying the device motion data and the vehicle motion data to the motion stabilization model framework, wherein the predicted eye motion data comprises one or more of estimated acceleration motion of the user's eye or estimated angular motion of the user eye.

In some embodiments, the motion stabilization model framework is a machine learning model (e.g., a data entity that describes parameters, hyper-parameters, and/or defined operations of a rules-based algorithm, machine learning model (e.g., model including at least one or more rule-based layers, one or more layers that depend on trained parameters, coefficients, and/or the like), and/or artificial intelligence model, and/or the like) that includes two or more models (which may include machine learning models) representing components of the motion stabilization model framework. In some embodiments, the motion stabilization model framework may include any type of model configured, trained, and/or the like to perform one or more operations and/or tasks related to and/or to support motion stabilization, such as, for example, generating predicted gaze position deviation data, generating predicted eye position deviation data, generating predicted eye motion data, and/or the like. In this regard, a motion stabilization model framework may be configured to utilize one or more of any types of machine learning, rules-based, and/or artificial intelligence techniques including one or more of, supervised learning (e.g., using user feedback), unsupervised learning, semi-supervised learning, reinforcement learning, computer vision techniques, sequence modeling techniques, language processing techniques, neural network techniques, and/or generative artificial intelligence techniques. In some embodiments, the motion stabilization model framework includes eye angular VOR motion prediction model, eye angular position tracking model, and/or other models as described herein.

At block 310, the process 300 continues with estimating a position change of a gaze of the user's eye on a screen of the display device based on the estimated acceleration motion and/or angular motion of the user's eye and/or eye motion due to VOR. For example, in various embodiments, the position stabilization system 102 estimates a position change of a gaze of the user's eye on a screen of the display device based on the estimated acceleration motion and/or angular motion of the user's eye and/or eye motion due to VOR. In some embodiments, the position stabilization system 102 leverages one or more models to estimate a position change of a gaze of the user's eye on the screen of the display device based on the estimated acceleration motion and/or angular motion of the user's eye. In some example embodiments, the position stabilization system 102 leverages an eye angular VOR motion prediction model and/or eye angular position tracking model to estimate the position change of a gaze of the user's eye on a screen of the display device. In such some embodiments, the position stabilization system 102 applies the predicted eye motion data to the eye angular VOR motion prediction model and/or eye angular position tracking model to generate predicted gaze position deviation data that comprise one or more items of data representative and/or indicative of estimated position change of a gaze of the user's eye(s) on a screen of the display device. In some embodiments, the position stabilization system 102, using the eye angular VOR motion prediction model, generates a predicted eye position due to VOR effects. Additionally, in some embodiments, the position stabilization system 102, using the eye angular position tracking model, corrects the predicted eye position after head motion has subsided.

At block 312, the process 300 continues with estimating a position change of the display device based on the detected acceleration motion and/or angular motion of the display device. For example, the position stabilization system 102 (e.g., using the position stabilization controller 110 thereof) may estimate a position change of the display device based on the detected acceleration motion and/or angular motion of the display device. In some embodiments, the position stabilization system 102 leverages one or more models to estimate a position change of the display device based on the detected acceleration motion and/or angular motion of the display device. In some embodiments, the position stabilization system 102 applies the detected acceleration motion of the display device and detected angular motion of the display device to one or more model components of the position stabilization model configured to generate predicted device position deviation data comprising one or more items of data representative and/or indicative of estimated position change of the display device.

At block 314, the process 300 continues with adjusting the position of an object on the screen of the display device based on the estimated position change of the gaze of the eye and/or the estimated position change of the display device. For example, the position stabilization system 102 (e.g., using the position stabilization controller 110 thereof) may adjust the position of an object on the screen of the display device based on the estimated position change of the gaze of the eye and/or the estimated position change of the display device to account for the estimated position change of the gaze of the eye and the estimated position change of the display device. By adjusting the position of an object on the screen of the display device to account for the estimated position change of the gaze of the eye and the estimated position change of the display device, the position stabilization system 102 provides for or otherwise allows the gaze of the user's eye to remain fixed on the object. In some embodiments, adjusting the position of the object on the screen of the display device comprises, the position stabilization system 102, applying the predicted eye motion data and predicted position data to one or more components of the position stabilization model configured to generate position adjustment data and adjusting the position of the object by an amount, measure, value, and/or the like reflected in the position adjustment data .

At block 316, the process 300, optionally, continues with generating a second, subsequent image, as part of a continuous stream of images, based on the first image and based on the adjusted position of the object on the screen. For example, the example position stabilization system 102 (e.g., using the position stabilization controller 110 thereof) may generate a second, subsequent image, as part of a continuous stream of images, based on the first image and based on the adjusted position of the object on the screen.

At block 318, the process 300, optionally, continues with displaying the second image on the display device. For example, the position stabilization system 102 (e.g., using the position stabilization controller 110 thereof) may display the second image on the display of display device. In various embodiments, the position stabilization system 102 is configured to improve the legibility of a moving screen (e.g., moving screen of the display device) by moving the image in sync with the user's gaze. The example position stabilization system 102 may detect (e.g., sense, determine, or the like) the motion of the screen and then render an image which is an inverse of the detected motion. When displayed on the moving screen, the image is space stabilized to prevent the motion and retina blur associated with moving electronic screens.

At block 320, the process, optionally, continues with re-mapping the touch zones on the screen based on the detected motion of the screen, such that the touch zones are space stabilized as well.

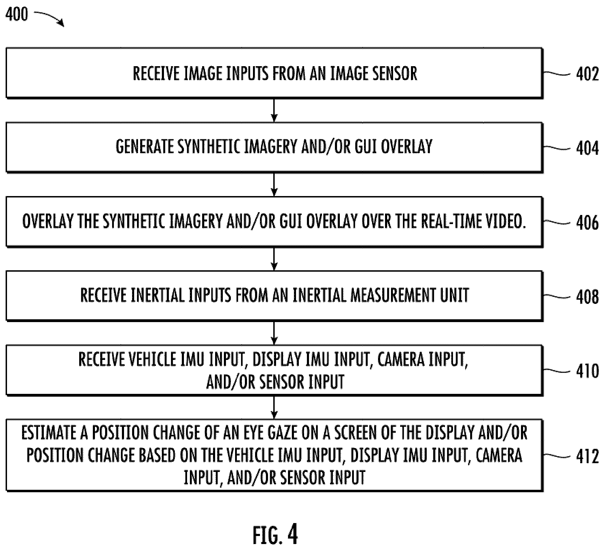

Figure 4 is a flowchart diagram of an example process for an aspect of a position stabilization in accordance with at least one embodiment of the present disclosure. In some example embodiments, the processes shown and described with respect to the flow chart of Figure 4 may be generated, performed, and/or otherwise facilitated by the various systems and apparatuses shown and described with respect to Figures 1-2.

As depicted at block 402, the process 400 begins with receiving image inputs from an image sensor 109 associated with an imaging system 106. In various embodiments, the example imaging system 106 is configured to receive image inputs from an image sensor 109 and generate a scene with real-time video to be displayed on the display device 108. The example display device 108 may comprise a tablet computer display, a smartphone display, a laptop computer display, any other mobile device with a screen, an avionics display such as an electronic flight bag, a primary flight display, a heads down display (HDD), and/or other displays.

At block 404, the process continues with generating synthetic imagery. For example, the example imaging system 106 may generate synthetic imagery (e.g., conformal and/or non-conformal) to overlay the real-time video. Additionally, in various embodiments, the example imaging system 106 may generate a graphical user interface (GUI) overlay to overlay the real-time video.

At block 406, the process 400 continues with overlaying the synthetic imagery and/or GUI overlay over the real-time video.

At block 408, the process 400 continues with receiving inertial inputs (e.g., from an inertial measurement unit (IMU) 111). For example, the imaging system 106 may receive inertial inputs from an inertial measurement unit (IMU) 111. The inertial inputs may comprise acceleration motion data, angular motion data, and/or the like. For example, the imaging system 106 may receive acceleration motion data from accelerometers. As another example, the imaging system 106 may receive angular motion data from gyroscopes. In various embodiments, the imaging system 106 may be configured to receive motion/position inputs from other motion/position sensors such as, for example, a global positioning system (GPS).

In various embodiments, the imaging system 106, image sensor 109 and/or IMU 111, and display device 108 may be part of a single system or device such as, for example, a tablet computer, smartphone, laptop computer, or other mobile device. In various embodiments, the imaging system 106, image sensor 109 and/or IMU 111, and display device 108 may be part of a single system that is fixed to the vehicle 160, such as a cockpit display of an aircraft.

At block 410, the process 400 continues with receiving vehicle IMU input. As described above, the example position stabilization system 102 may include a position stabilization controller 110. The example position stabilization controller 110 may be configured to receive a vehicle IMU input. The IMU input may include the detected acceleration motion in an X, Y, Z axis and/or angular motion (e.g., azimuth, elevation, and roll) of the vehicle 160. The example position stabilization controller 110 may be configured to receive a display IMU input that includes sensed acceleration motion in an X, Y, Z axis and/or angular motion (e.g., azimuth, elevation, and roll) of the display device 108. In various embodiments, the example position stabilization controller 110 is configured to receive camera input. The camera input may include eye motion data from which an eye gaze may be derived. The example position stabilization controller 110 may be configured to receive sensor input that determines display frame rate to estimate system latency that is used to compensate for lagged display effects of system latency.

At block 412, the process 400 continues with estimating a position change of an eye gaze on a screen of the display device and/or a position change based on the vehicle IMU input, display IMU input, camera input, and/or sensor input. For example, in some embodiments, a position stabilization controller 110 of the position stabilization system 102 may be configured to use the vehicle IMU input, display IMU input, camera input, and/or the sensor input to estimate the acceleration motion and/or angular motion of an eye of the user (e.g. reader), to estimate a position change of an eye gaze on a screen of the display device based on the estimated acceleration motion and/or angular motion of the eye and eye motion due to VOR, to estimate a position change of the display device based on the detected acceleration motion and/or angular motion of the display device, and to adjust the position of an object in a display to account for the estimated position change of the eye gaze and the estimated position change of the display device to allow the eye gaze to remain fixed on the object, as described above.

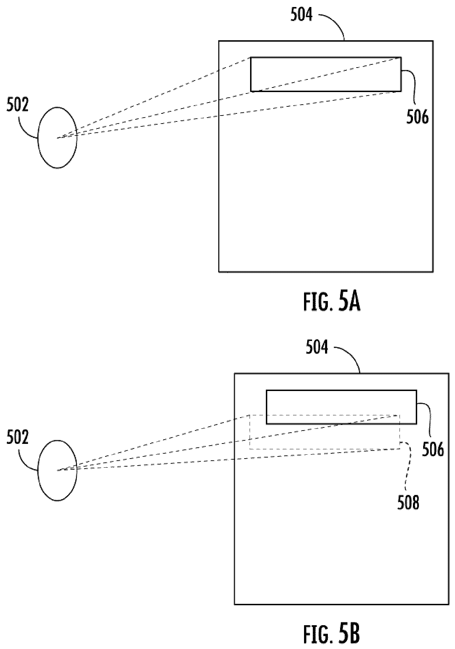

Figures 5A-B illustrate operational examples in accordance with at least some embodiments of the present disclosure. Shown in Figure 5A, is an eye 502 of a user (e.g., reader), a screen 504, and an object 506 on the screen 504. In the illustrated example of Figure 5A, the eye 502 of the user is trained on the object 506. Shown in Figure 5A, is an eye 502 of the user (e.g., reader), a screen 504, and the object 506 on the screen 504. In the illustrated example of Figure 5B, the gaze 508 of the eye 502 of the user is not trained on the object 506 due to motion of the eye 502 and/or the screen 504 relative to each other due to motion experienced by a vehicle in which the reader and a display on which the screen 504 is displayed are in.

### Conclusion

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A computer-implemented method for motion stabilization, the computer-implemented method comprising:
receiving a first image for rendering on a display device associated with a vehicle, the first image comprising at least one object;
identifying device motion data for the display device by receiving one or more device inertial measurement inputs from one or more device inertial measurement units, wherein the device motion data comprises one or more of (i) device acceleration motion or (ii) device angular motion;
identifying vehicle motion data for the vehicle by receiving one or more vehicle inertial measurement inputs from one or more vehicle inertial measurement units, wherein the vehicle motion data comprises one or more of (i) vehicle acceleration motion or (ii) vehicle angular motion;
generating, using a motion stabilization model framework, predicted gaze position deviation data based on the device motion data and vehicle motion data, wherein the predicted gaze position deviation data comprises estimated position change of a gaze of an eye of a user on a screen of the display device; and
adjusting a position of the at least one object on the screen of the display device based at least in part on the predicted gaze position deviation data.

2. The computer-implemented method of claim **1,** further comprising:
generating, using the motion stabilization model framework, predicted device position deviation data based on the device motion data, wherein the predicted device position deviation data comprises estimated position change of the display device.

3. The computer-implemented method of claim 2, further comprising:
adjusting the position of the at least one object on the screen of the display device based at least in part on the predicted device position deviation data.

4. The computer-implemented method of claim 1, further comprising:
detecting motion of the screen of the display device; and
re-mapping touch zones on the screen based on the detected motion of the screen.

5. The computer-implemented method of claim 1, wherein generating the predicted gaze position deviation data based on the device motion data and the vehicle motion data comprises:
generating predicted eye motion data by applying the device motion data and the vehicle motion data to the motion stabilization model framework, wherein the predicted eye motion data comprises one or more of (i) estimated acceleration motion of the eye of the user or (ii) estimated angular motion of the eye of the user; and
generating, the predicted gaze position deviation data by applying the predicted eye motion data to the motion stabilization model framework.

6. The computer-implemented method of claim 5, wherein the motion stabilization model framework comprises one or more of (i) eye angular VOR motion prediction model or (ii) eye angular position tracking model.

7. The computer-implemented method of claim 1, wherein the display device is one of a smartphone, a laptop computer, an avionics display, a primary flight device, or a heads down display.

8. A computing system for motion stabilization, the computing system comprising memory and one or more processors communicatively coupled to the memory, the one or more processors configured to:
receive a first image for rendering on a display device associated with a vehicle, the first image comprising at least one object;
identify device motion data for the display device by receiving one or more device inertial measurement inputs from one or more device inertial measurement units, wherein the device motion data comprises one or more of (i) device acceleration motion or (ii) device angular motion;
identify vehicle motion data for the vehicle by receiving one or more vehicle inertial measurement inputs from one or more vehicle inertial measurement units, wherein the vehicle motion data comprises one or more of (i) vehicle acceleration motion or (ii) vehicle angular motion;
generate, using a motion stabilization model framework, predicted gaze position deviation data based on the device motion data and vehicle motion data, wherein the predicted gaze position deviation data comprises estimated position change of a gaze of an eye of a user on a screen of the display device; and
adjust a position of the at least one object on the screen of the display device based at least in part on the predicted gaze position deviation data.

9. The computing system of claim 8, wherein the one or more processors are further configured to:
generate, using the motion stabilization model framework, predicted device position deviation data based on the device motion data, wherein the predicted device position deviation data comprises estimated position change of the display device.

10. The computing system of claim 9, wherein the one or more processors are further configured to:
adjust the position of the at least one object on the screen of the display device based at least in part on the predicted device position deviation data.

11. The computing system of claim 8, wherein the one or more processors are further configured to:
detect motion of the screen of the display device; and
re-map touch zones on the screen based on the detected motion of the screen.

12. The computing system of claim 8, wherein generating the predicted gaze position deviation data based on the device motion data and the vehicle motion data comprises:
generating predicted eye motion data by applying the device motion data and the vehicle motion data to the motion stabilization model framework, wherein the predicted eye motion data comprises one or more of (i) estimated acceleration motion of the eye of the user or (ii) estimated angular motion of the eye of the user; and
generating, the predicted gaze position deviation data by applying the predicted eye motion data to the motion stabilization model framework.

13. The computing system of claim 8, wherein the motion stabilization model framework comprises one or more of (i) eye angular VOR motion prediction model or (ii) eye angular position tracking model.

14. The computing system of claim 8, wherein the display device is one of a smartphone, a laptop computer, an avionics display, a primary flight device, or a heads down display.

15. One or more non-transitory computer-readable storage media for motion stabilization, the one or more non-transitory computer-readable storage media including instructions that, when executed by one or more processors, cause the one or more processors to:
receive a first image for rendering on a display device associated with a vehicle, the first image comprising at least one object;
identify device motion data for the display device by receiving one or more device inertial measurement inputs from one or more device inertial measurement units, wherein the device motion data comprises one or more of (i) device acceleration motion or (ii) device angular motion;
identify vehicle motion data for the vehicle by receiving one or more vehicle inertial measurement inputs from one or more vehicle inertial measurement units, wherein the vehicle motion data comprises one or more of (i) vehicle acceleration motion or (ii) vehicle angular motion;
generate, using a motion stabilization model framework, predicted gaze position deviation data based on the device motion data and vehicle motion data, wherein the predicted gaze position deviation data comprises estimated position change of a gaze of an eye of a user on a screen of the display device; and
adjust a position of the at least one object on the screen of the display device based at least in part on the predicted gaze position deviation data.
